# EUROPÄISCHE PATENTANMELDUNG

(11) **EP 2 017 530 A2**
(43) Veröffentlichungstag der Anmeldung: **21.01.2009**
(21) Anmeldenummer: 08159479.8
(22) Anmeldetag: 02.07.2008
(51) Int. Cl.: F23J 11/00, F23J 13/02

(54) **Raumluftunabhängiges Kaminsystem für Wohngebäude**

(30) Priorität: 13.07.2007 DE 202007009821 U
(71) Anmelder: Kastell GmbH, 72519 Veringenstadt (DE)
(72) Erfinder: Schwörer, Johannes, 72531 Hohenstein-Oberstetten (DE)
(74) Vertreter: Schaumburg, Thoenes, Thurn, Landskron

(57) **Zusammenfassung**

Die Erfindung betrifft Kaminsystem für ein Wohngebäude (10) mit einem Kaminofen (12), einem darauf aufbauenden Schornstein (14) mit einem rohrförmigen Rauchgaskanal (16) zur Ableitung von Rauchgas und mit einem Verbrennungsluftkanal (18) zur Verbrennungsluftzuführung. Der Kaminofen (12) enthält eine Feuerstätte (30), die Verbrennungsluft aus dem Verbrennungsluftkanal (18) erhält und die das bei Verbrennung entstehende Rauchgas über den Rauchgaskanal (16) abgibt.

## Beschreibung

Die Erfindung betrifft ein Kaminsystem für ein Wohngebäude. In Wohngebäuden besteht häufig der Wunsch, einen Kaminofen in den Wohnbereich einzubeziehen. Ein solcher Kaminofen ist häufig für die Bewohner Ausdruck einer besonderen Wohnkultur und dient außerdem als Schmuck und Repräsentation für den Wohnraum. Der Kaminofen ist normalerweise in einer Mauernische oder einer Wandnische angeordnet und hat vorzugsweise eine offene Feuerstelle, deren Wärme überwiegend durch Strahlung des offenen Feuers an den Raum abgegeben wird. Die Energieausbeute ist jedoch gering, da der größte Teil der Wärme mit den Rauchgasen durch den Schornstein abgeführt wird. Ein Problem wird auch häufig darin gesehen, dass Funken und Ascheteilchen bei einer offenen Feuerstelle in den Wohnraum gelangen können.

Es ist Aufgabe der Erfindung, ein Kaminsystem anzugeben, das eine hohe Energieausbeute bei einer geringen Verschmutzung hat.

Diese Aufgabe wird durch ein Kaminsystem für ein Wohngebäude gelöst, das einen Schornstein aufweist, umfassend einen rohrförmigen Rauchgaskanal zur Ableitung von Rauchgas und einen Verbrennungsluftkanal zur Verbrennungsluftzuführung, wobei in einem unteren Abschnitt des Schornsteins ein Kaminofen angeordnet ist, der Verbrennungsluft aus dem Verbrennungsluftkanal erhält und der das bei Verbrennung entstehende Rauchgas über den Rauchgaskanal abgibt.

Gemäß der Erfindung erfolgt die Verbrennungsluftzufuhr für die Feuerstätte nicht durch den Wohnraum, in welchem die Feuerstätte angeordnet ist, sondern über einen speziellen Verbrennungsluftkanal, welcher vorzugsweise als Ringspalt im Kamin integriert ist. Demgemäß ist die Feuerstätte unabhängig von der Raumluft und verbraucht diese nicht. Das Kaminsystem ist so ausgelegt, dass die Feuerstätte ausschließlich Verbrennungsluft aus dem Verbrennungsluftkanal erhält. Demgemäß kann die Feuerstätte im Kaminofen gegenüber dem Wohnraum vollständig abgeschlossen werden, beispielsweise durch Vorsehen eines Schutzglases an der Tür der Feuerstätte. Dieses Schutzglas kann weitgehend luftdicht mit der Kaminöffnung abgeschlossen sein. Die Bewohner des Wohngebäudes können bei einer solchen Anordnung weiterhin die Strahlungswärme des Feuers behaglich aufnehmen und sich am Spiel der Flammen erfreuen. Aufgrund der Abgeschlossenheit der Feuerstätte ist die Verschmutzungsgefahr verringert. Weiterhin ist infolge der Abgeschlossenheit unter Verbrennungsluftzufuhr von außen die Energieausbeute verbessert.

Gemäß einem bevorzugten Ausführungsbeispiel ist im Bereich der Feuerstätte ein Wärmetauscher mit einem Wärmemedium, z.B. Wasser, angeordnet, wobei das Wärmemedium vom Feuer der Feuerstätte erwärmt wird und die aufgenommene Wärme einem entfernt angeordneten Wärmespeicher, vorzugsweise einem Solarwärmespeicher, zugeführt wird. Auf diese Weise wird die Wärmeenergie der Feuerstätte mit einem erhöhten Wirkungsgrad ausgenützt.

Eine weitere Verbesserung der Energieausbeute wird dadurch erreicht, dass eine Solaranlage auf dem Dach des Wohngebäudes angeordnet ist, die dem Solarwärmespeicher Wärme zuführt. Das durch Sonnenenergie erwärmte Medium des Solarwärmespeichers, beispielsweise Wasser, wird durch das Feuer der Feuerstätte weiter erhöht, so dass innerhalb des Wohngebäudes eine hohe Energieausnutzung gewährleistet ist.

Ausführungsbeispiele der Erfindung werden nachfolgend anhand der Zeichnung erläutert. Darin zeigt
- Figur 1: schematisch ein Kaminofenystem für ein Wohngebäude, wobei eine Feuerstätte im Erdgeschoss angeordnet ist,
- Figur 2: eine schematische Ansicht des Kaminofens mit Feuerstätte,
- Figur 3: verschiedene Anschlüsse für den Kaminofen, und
- Figur 4: einen Querschnitt durch einen Schornsteinabschnitt mit Verbrennungsluftkanal und Rauchgaskanal.

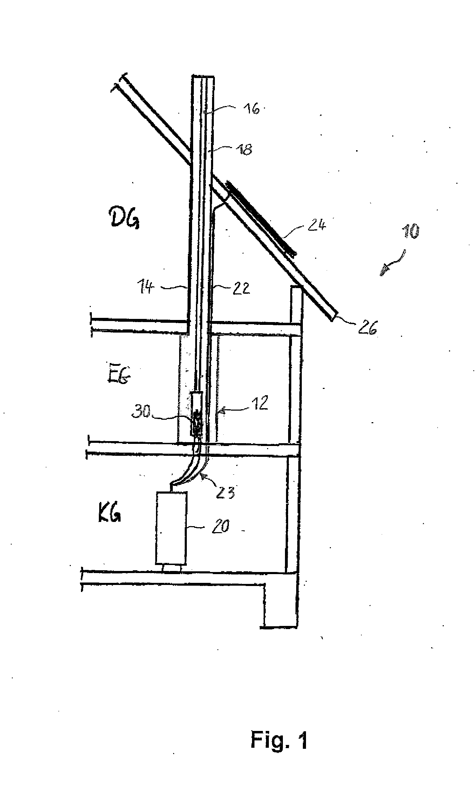

In Figur 1 ist schematisch ein Abschnitt eines Wohngebäudes 10 dargestellt, das ein Dachgeschoß DG, ein Erdgeschoß EG und ein Kellergeschoß KG umfasst. Im Erdgeschoß EG ist ein Kaminofen 12 mit einem Schornstein 14 angeordnet. Der Schornstein 14 umfasst einen innen liegenden Rauchgaskanal 16 und einen um den Rauchgaskanal 16 konzentrisch angeordneten Verbrennungsluftkanal 18. Von einer Feuerstätte 30 gehen Anschlüsse 23 zu einem Solarwärmespeicher 20, welcher im Kellergeschoss KG angeordnet ist. Leitungen 22 führen zu einer Solaranlage 24, die auf dem Dach 26 des Wohngebäudes 10 installiert ist und Sonnenenergie in Wärmeenergie wandelt. Die Leitungen 23 führen direkt von der Feuerstätte 30 im Kaminofen 12 in den Solarwärmespeicher 20.

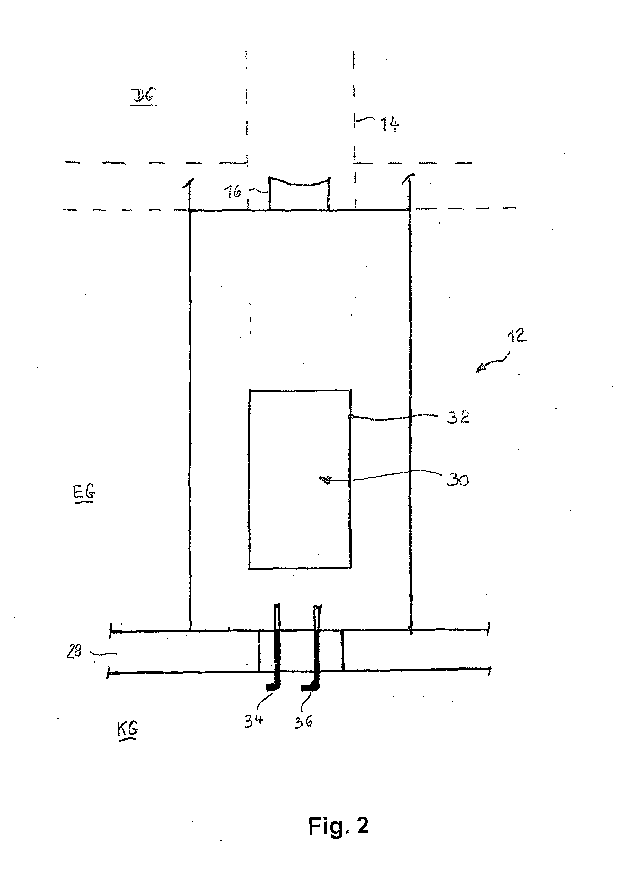

Figur 2 zeigt den Aufbau des Kaminofens 12, der raumhoch im Erdgeschoß EG oberhalb einer Kellergeschoßdecke 28 angeordnet ist, welche das Erdgeschoß EG vom Kellergeschoß KG trennt. Der Kaminofen 12 enthält die Feuerstätte 30, die über eine Türe 32, beispielsweise aus hitzebeständigem Glas, abgeschlossen ist und zur Beschickung und Reinigung der Feuerstätte 30 dient. Eine Vorlaufleitung 34 und eine Rücklaufleitung 36 führen durch die Kellerdecke 28 hindurch zum Solarwärmespeicher 20, der im Kellergeschoß KG angeordnet ist. Die Vorlaufleitung 34 und Rücklaufleitung 36 führen zu einem Wärmetauscher, der die Feuerstätte 30 umgibt, wobei das in ihm fließende Wärmemedium, z.B. Wasser, durch das Feuer erwärmt wird. Am oberen Ende des Kaminsofens 12 ist ein Anschluss für den Schornstein 14 vorgesehen.

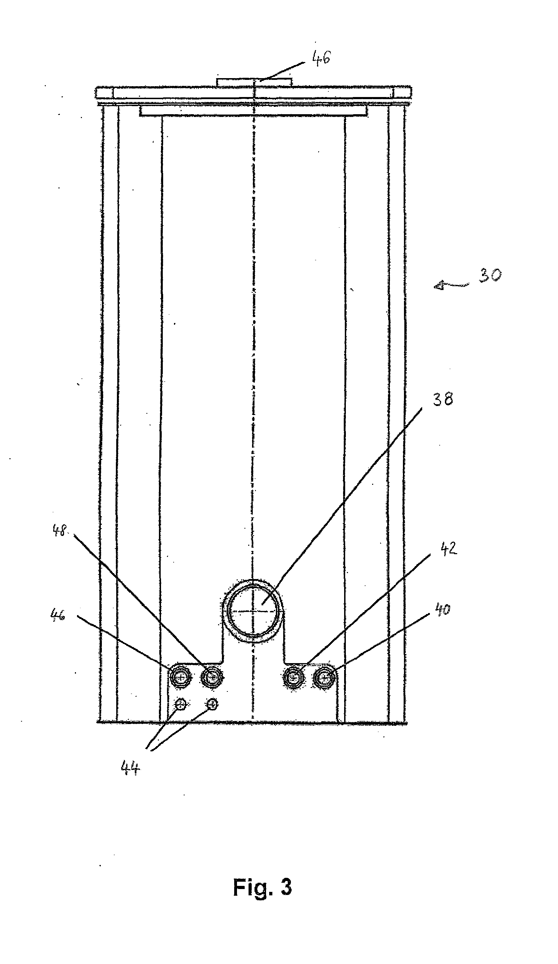

Figur 3 zeigt ein Ausführungsbeispiel für die Feuerstätte 30 von hinten mit ihren Anschlüssen. Der Kaminofen 12 kann typischerweise eine Leistung von 6 bis 15 kW haben, wobei die auf den Solarwärmespeicher entfallende Leistung ca. 70 % beträgt. Die Feuerstätte 30 enthält eine Rohröffnung 38 für die Verbrennungsluftzuführung, sowie Anschlüsse 40, 42 für die Vorlaufleitung 34 und die Rücklaufleitung 36. Im unteren Teil sind zwei Kabeldurchführungen 44 vorgesehen, durch die elektrische Kabel für die elektrische Regelung und die thermische Sicherung geführt werden können. Im oberen Bildteil befindet sich ein Anschluss 46 für den Rauchgaskanal 16. Anschlüsse 46, 48 dienen für den Frischwasserzulauf und einen Wasserauslauf.

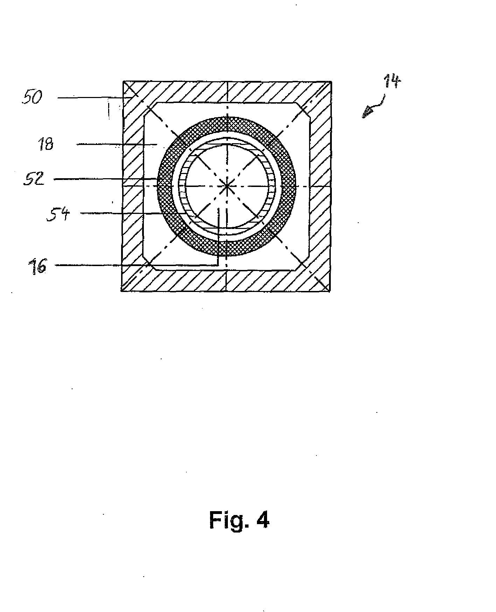

Figur 4 zeigt einen Querschnitt durch den Schornstein 14. Dieser Schornstein 14 ist aus geschosshohen Bauelementen zusammengesetzt. Der Schornstein 14 ist in raumsparender, konzentrischer Bauweise aufgebaut. Er umfasst einen äußeren Mantelstein 50 aus Leichtbeton. Im Inneren ist ringförmig eine Dämmung 52 aus Mineralfaser angeordnet. Zwischen der Dämmung 52 und dem Mantelstein 50 verläuft der Verbrennungsluftkanal 18. In den Mantelstein 50 können an beliebigen Stellen Anschlüsse eingelassen werden, um Verbrennungsluft aus dem Verbrennungsluftkanal 18 zu entnehmen. Innerhalb der Dämmung 52 ist eine Säule 54 aus Muffenrohren aus hochwertiger Edelkeramik angeordnet. Die Säule 54 hat typischerweise einen Durchmesser von 10 bis 20 cm. Innerhalb der Säule 54 befindet sich der Rauchgaskanal 16, über den Rauchgas von der Feuerstätte nach außerhalb vom Wohngebäude 10 gefördert wird.

## Patentansprüche

1. Kaminsystem für ein Wohngebäude (10),
mit einem Kaminofen (12), darauf aufbauend ein Schornstein (14) mit einem rohrförmigen Rauchgaskanal (16) zur Ableitung von Rauchgas und einem Verbrennungsluftkanal (18) zur Verbrennungsluftzuführung,
wobei der Kaminofen (12) eine Feuerstätte (30) enthält, die Verbrennungsluft aus dem Verbrennungsluftkanal (18) erhält und die das bei Verbrennung entstehende Rauchgas über den Rauchgaskanal (16) abgibt.

2. Kaminsystem nach Anspruch 1, **dadurch gekennzeichnet, dass** der Kaminofen (12) im Erdgeschoß (EG) des Wohngebäudes (10) beginnt und die Feuerstätte (30) im Erdgeschoß (EG) angeordnet ist.

3. Kaminsystem nach Anspruch 1 oder 2, bei dem im Bereich der Feuerstätte (30) ein Wärmetauscher mit einem Wärmemedium angeordnet ist, wobei das Wärmemedium vom Feuer der Feuerstätte (30) erwärmt wird und die aufgenommene Wärme einem entfernt angeordneten Wärmespeicher (20), vorzugsweise einem Solarwärmespeicher, zugeführt wird.

4. Kaminsystem nach einem der vorhergehenden Ansprüche, bei dem der Verbrennungsluftkanal (18) konzentrisch um den innen liegenden Rauchgaskanal (16) ausgebildet ist.

5. Kaminsystem nach einem der vorhergehenden Ansprüche, **dadurch gekennzeichnet, dass** der Schornstein (14) des Kaminofens (12) außen einen Mantelstein (50) aus Leichtbeton hat, der den umlaufenden Verbrennungsluftkanal (18) umgibt, der an einer Stelle Anschlüsse für den Austritt von Verbrennungsluft hat.

6. Kaminsystem nach Anspruch 5, **dadurch gekennzeichnet, dass** der Verbrennungsluftkanal (18) im Inneren eine Dämmung (52) aus Mineralfaser hat, an die sich eine Muffenrohrsäule (54) aus Keramik anschließt, die den inneren Rauchgaskanal (16) begrenzt.

7. Kaminsystem nach einem der Ansprüche 3 bis 6, **dadurch gekennzeichnet, dass** eine Solaranlage (24) auf dem Dach (26) des Gebäudes (10) angeordnet ist, die dem Solarwärmespeicher (20) Wärme zuführt.
